# EUROPÄISCHE PATENTSCHRIFT

(11) **EP 1 111 074 B1**
(45) Veröffentlichungstag und Bekanntmachung des Hinweises auf die Patenterteilung: **09.03.2005**
(21) Anmeldenummer: 00126343.3
(22) Anmeldetag: 02.12.2000
(51) Int. Cl.: C21D 9/04, C21D 11/00, B21B 37/74

(54) **Verfahren und Vorrichtung zum Abkühlen von warmgewalzten Profilen**
Method and device for cooling hot-rolled profiles
Procédé et dispostif de refroidissement de profilés laminés à chaud

(30) Priorität: 23.12.1999 DE 19962891
(43) Veröffentlichungstag der Anmeldung: 27.06.2001
(73) Patentinhaber: SMS Demag AG, 40237 Düsseldorf (DE)
(72) Erfinder: Meyer, Meinert, 40699 Erkrath (DE); Plociennik, Uwe, 40882 Ratingen (DE)
(74) Vertreter: Valentin, Ekkehard, Dipl.-Ing.

(56) Entgegenhaltungen:
- EP-A- 0 453 566
- EP-A- 0 725 152
- EP-A- 0 807 692
- EP-A- 0 997 203
- US-A- 4 486 248
- PATENT ABSTRACTS OF JAPAN vol. 016, no. 413 (C-0980), 2. September 1992 (1992-09-02) -& JP 04 141520 A (KAWASAKI STEEL CORP), 15. Mai 1992 (1992-05-15)

## Beschreibung

Die Erfindung betrifft ein Verfahren zum Abkühlen von warmgewalzten Profilen aus der Walzhitze, die aus Profilteilen mit unterschiedlicher Masse ausgebildet sind, wobei unter Verwendung von messtechnischen Mitteln im Zusammenwirken mit einem Rechner mit Hilfe eines Rechenprogramms die den unterschiedlichen Profilteilen nach Maßgabe ihrer Masse und Temperatur anteilig zu entziehenden Wärmemengen und die hierfür erforderlichen Aufgabemengen des Kühlmittels berechnet und gesteuert werden.

Auf Kühlbetten wird profiliertes Walzgut, beispielsweise werden Schienen aus der Walzhitze bis auf Temperaturen unter 80 °C abgekühlt. Wegen der unsymmetrischen Anordnung der Massen des Profils ergibt sich dabei zwischen Kopf und Fuß der Schiene ein unterschiedliches Abkühlverhalten, bei dem der Fuß infolge seiner vergleichsweise zur Masse größeren Wärmeabgabeflächen schneller abkühlt als der Kopf. Daraus resultiert, dass sich die Schiene beim Erkalten krümmt. Diesem Krummwerden kann bis zu einem gewissen Maß durch Vorbiegen der noch heißen Schiene begegnet werden. Dies erfordert jedoch nachteilig einen aufwendigen Warmbiegevorgang mit ungewissem Ergebnis. In jedem Falle müssen dabei die Schienen nach dem Abkühlen nachgerichtet werden. Sowohl durch den Kühlprozess als auch besonders durch das Richten entstehen Eigenspannungen in der Schiene, die deren Festigkeit nachteilig beeinflussen. Es wurden bereits zahlreiche Vorschläge bekannt, um dieser Schwierigkeit wirksam zu begegnen:

Die DE 42 37 991 A1 beschreibt ein Verfahren zur Abkühlung von in Walzgerüsten warmgewalztem profiliertem Walzgut, insbesondere von Schienen auf einem Kühlbett, mit natürlicher Konvektion oder mit forcierter Luftkühlung. Die Erfindung besteht darin, dass die Schienen mit dem Kopf nach unten hängend, über das Kühlbett transportiert werden. Durch diese Maßnahme werden bereits bei natürlicher Konvektion die Wärmeübergangsverhältnisse so günstig verändert, dass die Temperaturdifferenz zwischen Kopf und Fuß der Schiene von ca. 140 °C bei liegender Schiene auf ca. 50 °C bei hängender Schiene zurückgeht.

Aus der DE-PS 21 61 704 ist ein Verfahren sowie eine Einrichtung zum spannungs- und verzugsfreien Abkühlen von Eisenbahnschienen bekannt, welches darin besteht, dass die abzukühlenden gleichartigen Schienenprofile mit ihren Schienenfüßen paarweise symmetrisch und gegenseitig Widerlager bildend, Fuß gegen Fuß zusammengespannt und durch einen Querförderer über ein Kühlbett gefördert werden. Da jeder Schienenkopf zwar eine etwa gleichgroße Masse wie der Schienenfuß hat, jedoch der Umfang des Schienenfußes etwa doppelt so groß ist wie der des Schienenkopfes, wird die Umfangsfläche der zusammengespannten Schienenfüße im Verhältnis zu ihrer Masse etwa gleich groß, wie das Verhältnis von Umfangsfläche und Masse am Schienenkopf. Damit wird ein gleichmäßiges Abkühlen von Schienenköpfen und Schienenfüßen erzielt.

In der US-PS 468 788 ist ein Verfahren zum Abkühlen von Schienen offenbart, wobei diese in einer Vorrichtung mit nach unten hängenden Schienenköpfen in ein mit Wasser gefülltes Becken ganz oder teilweise eingetaucht und dadurch abgekühlt werden, wobei sie gleichzeitig mittels Druckschrauben gegen ein festes Wiederlager gedrückt werden.

In der DE-PS 404 127 ist ein Verfahren zum Richten von Metallstangen unsymmetrischen Querschnitts, insbesondere von Eisenbahnschienen, offenbart, bei dem die starken Teile des Querschnitts einer derart geregelten künstlichen Abkühlung unterworfen werden, dass alle Teile trotz ihrer ungleichen Stärken um dasselbe Maß schwinden und die Stangen bei Abkühlung bis auf Umgebungstemperatur gerade bleiben. Erzielt wird dieses Ergebnis dadurch, dass die künstliche Abkühlung entweder durch Eintauchen in eine Flüssigkeit, durch Benetzen oder Berieseln, durch Anblasen mit einer zerstäubten Flüssigkeit, mit Dampf, Luft oder anderen Gasen erzeugt wird, wobei das verwendete Mittel stetig oder mit Unterbrechungen während der ganzen Dauer oder nur während eines Teils der Abkühlungsdauer wirkt.

Aus der DE-PS 19 42 929 ist ein Verfahren zum Abkühlen von Schienen bekannt, bei dem die Schienen vor Erreichen der Austenit-Umwandlungstemperatur mit Abstand über einer wärmereflektierenden Schicht auf dem Schienenfuß abgestellt werden. Zusätzlich kann dabei auf die Laufflächen der Schienen im weiteren Verlauf der Abkühlung ein fester Isolierstoff aufgelegt werden. Eine gegenseitige positive Beeinflussung durch Strahlung wird weiterhin bei diesem Verfahren dadurch erreicht, dass die Schienen unmittelbar nebeneinander abgestellt werden, so dass sich die Schienenfüße seitlich berühren. Es entsteht dabei ein günstiger Spannungsausgleich im Schienenquerschnitt. Das Abstetlen der Schienen auf dem Schienenfuß vor dem Erreichen der Austenit-Umwandlungstemperatur mit Abstand über einer wärmereflektierenden Schicht ergibt den Vorteil, dass das frühere Einsetzen der Austenit-Umwandlung im Schienenfuß und -steg verhindert wird.

Das Gegenteil hiervon, nämlich eine Durchhärtung des Schienenkopfes infolge eines entsprechend rapiden Kühlverfahrens wird nach dem FR-PS 543.461 dadurch erreicht, dass die Schiene über Kopf mit dem Schienenfuß nach oben hängend einer Serie definierter Tauchvorgänge von sehr kurzer Dauer in einem mit Wasser gefüllten Trog unterzogen wird.

Die genannten Verfahren weisen den gemeinsamen Nachteil auf, dass sie mehr oder minder auf Empirie beruhen, d. h. dass durch langwierige Versuche zunächst einmal ermittelt werden muss, welche Parameter bei der Durchführung des Verfahrens eingehalten werden müssen, um das gewünschte Abkühlungsergebnis zu gewährleisten. Dabei werden zumindest bei jeder Charge Versuchsstücke von warmgewalzten Profilen verwendet, die bei nicht sogleich befriedigendem Ergebnis Wiederholungen erfordern und vielfach zunächst zum Anfall von Ausschussmaterial führen.

Damit profiliertes Walzgut gezielt gekühlt werden kann, ist die Kenntnis der während des Umformprozesses entstandenen Temperaturverteilung über den gesamten Querschnitt und über die Länge des Walzgutes erforderlich. In der DE 195 03 747 A1 wird deshalb vorgeschlagen, dass zunächst unter Verwendung von messtechnischen Mitteln, im Zusammenwirken mit einer Recheneinheit mit Hilfe eines Rechenprogramms die den unterschiedlichen Profilteilen nach Maßgabe ihrer Masse und Temperatur anteilig zu entziehenden Wärmemengen und die hierfür erforderliche Aufgabenmenge von Kühlmedien ermittelt und berechnet und danach die Abkühlung der unterschiedlichen Profilteile bzw. ihrer Massen derart gesteuert vorgenommen wird, dass diese mit möglichst geringem Zeitversatz die Umwandlungslinie Aᵣ₃/Aᵣ₁ beim Zerfall des Gamma-Mischkristalls in Ferrit und/oder Perlit unter Freisetzung der UmwandLungswärme erreichen. Mit großem Vorteil wird durch das Verfahren erreicht, dass bei unterschiedlichen Chargen auch ohne das Erfordernis kostspieliger empirischer Versuche ein einwandfreies Abkühlungs-Ergebnis ohne Krümmung des Profils erhalten wird.

Ausgehend von diesem Stand der Technik liegt der Erfindung die Aufgabe zugrunde, ein Verfahren zum Abkühlen von warmgewalzten Profilen der im Oberbegriff von Anspruch 1 genannten Art aufzuzeigen bzw. so weit zu vervollkommenen, dass damit die vorgenannten Schwierigkeiten überwunden werden und ein verzugsfreies Abkühlungsergebnis beim Abkühlen aus der Walzhitze ohne kosten- und zeitaufwendige Versuche und ohne Anfall von dadurch bedingtem Schrott erreicht wird.

Die gestellte Aufgabe wird mit den kennzeichnenden Merkmalen des Anspruchs 1 dadurch gelöst, dass der Temperaturverlauf in der Walzstraβe für das Walzgut bereits vor dem eigentlichen Walz- bzw. Kühlprozess simuliert wird, wobei in mehreren Simulationsrechnungen die Kühlparameter in der simulation so variiert werden, dass die Einstellungen des gewünschten Kühlverfahrens, beispielsweise Kühlen durch Abschrecken oder Kühlen mit minimalen Temperaturunterschieden, durch die erhaltenen Parameter aus der Simulation unter Einbeziehung vor und nach der Kühlstrecke gemessener Ist-Werte geregelt werden.

Nach einer vorteilhaften Ausgestaltung der Erfindung werden die für die Veränderung der Kühlparameter erforderlichen Regelungsparameter (z. B. Verstärkungsfaktoren) ebenfalls in der Simulationsrechnung berechnet und der Regelung zur Verfügung gestellt.

Ferner ist vorteilhaft vorgesehen, dass für die Simulation des Temperaturverlaufs des Walzgutes die gesamte Oberfläche des Walzgutes in unterschiedliche Zonen mit entsprechend versehenen Randbedingungen aufgeteilt wird und diese Zonen mit den berechneten Kühlparametern beaufschlagt werden.

Durch die Maßnahmen der Erfindung wird es möglich, die Kühlparameter wie Kühtmittetdruck, Kühlmittelvolumenstrom, Anordnung der Kühlzonen und der zu kühlenden Profilteile auch für wechselnde Profilausbildungen so festzulegen, dass ein optimales Kühlergebnis erreicht wird.

Kontrolliert und ergänzt werden die Simulationsrechnungen durch Messung der Walzguttemperatur über Profilumfang und Profillänge vor und nach den Kühlzonen. Weichen die Temperaturen bereits vor Eintritt des Walzgutes in die Kühlzone ab, so wird eine Veränderung der Vorsteuerung der Kühlzone noch vor dem Eintritt des Walzgutes in die Kühlzone vorgenommen. Weichen die Temperaturen des Walzgutes hinter der Kühlzone von den SoLLtemperaturen ab, so wird ebenfalls mit den Parametern aus der Simulation eine Korrektur der Einstellungen der Kühlstrecke vorgenommen.

Zur Durchführung des Verfahrens der Erfindung sind mehrere Funktionseinheiten zu einem geschlossenen Wirkkreis miteinander verknüpft, wie dies in der Zeichnungsfigur an einem Ausführungsbeispiel dargestellt ist.

Der Wirkkreis besteht dabei aus fünf miteinander verknüpften Funktionseinheiten 1, 2, 3, 4, 5, deren Aufgaben und Funktionen nachfolgend beschrieben werden:

In der Simulations-Einheit 1 werden durchgeführt:
- Simulation des Temperaturverlaufs für den Walz- und Abkühlprozess,
- Erzeugung der Kühlprogramme mit den Einstellwerten für die Wasserkühlstrecken und die Luftkühlstrecken, und zwar
   * Speicherung der Stichpläne,
   * Berechnung der Walzkraft, Walzleistung und Walzmomente,
   * Berechnung der Umformenergie und Temperaturverteilung im Walzgut,
   * Berechnung der Wasserdrücke und Wassermengen,
   * Festlegung der Anzahl und Schaltfolge der Wasserkühlzonen,
   * Berechnung der Regelparameter,
   * Ermittlung der Umformfestigkeit als Funktion des Umformverhältnisses, der Umformgeschwindigkeit und der Umformtemparatur,
   * Ermittlung der kalorischen Daten als Funktion der Temperatur,
   * Berechnung der Temperaturverluste zwischen den Gerüsten, in der Wasserkühlstrecke und auf den Luftkühlstrecken,
- Darstellung der Temperaturverläufe in der Walzstraße, in den Wasserkühlstrecken und in den Luftkühlstrecken,
- Darstellung der Abkühlverläufe im ZTU-Diagramm (Zeit - Temperatur - Umwandlungsdiagramm),
- Darstellung des Abkühlgeschwindigkeitsverlaufes in den Luftkühlstrecken,
- Darstellung der Gefügeanteile sowie der Härte entsprechend dem ZTU-Diagramm und Eintragung der berechneten Abkühlgeschwindigkeiten,
- Ausgabe der Einstellwerte für die Wasserkühlstrecke und die Luftkühlstrecken,
- Ausgabe der Plotterbilder für
   * Temperaturverlauf in der Walzstraße und den Kühlstrecken über die Zeit,
   * Temperaturverlauf in der Walzstraße und den Kühlstrecken über die Länge,
   * Temperaturprofil des Walzgutquerschnittes in den Kühlstrecken,
   * Abkühlgeschwindigkeitsverlauf in den Kühlstrecken,
   * Abkühlverlauf im ZTU-Diagramm,
   * Gefügeanteile und Härte,
   * Vergleich Soll-/Ist-Werte im Temperaturverlauf.

über die Verknüpfung 10 findet eine Kommunikation mit der Regelungs-Einheit 5 statt, in den die in der Simulations-Einheit 1 erstellten Kühlprogramme einfließen. In der Regelungs-Einheit 5 werden durchgeführt:
- Verwaltung der Kühlprogramme, der Produktions-, der Produktund der Prozessdaten,
- Vorgabe der Einstellwerte für die Wasserkühlstrecken und die Luftkühlstrecken,
- Steuerung und Regelung der Kühlstrecken (Wasserkühlstrecken, Luftkühlstrecken),
- Erfassung der Produktions-, Produkt- und Prozess-Istwerte,
- Speicherung der Produktions-, der Produkt- und der Prozessdaten für eine zeitlich versetzte Ausgabe,
- Visualisierung der Kühlprozesse,
- Graphische Darstellung für
   * Endwalztemperatur,
   * Intrittstemperatur Kühlstrecke,
   * Abkühlzeit t _{8/5}.

über eine Verknüpfung 6 werden die erhaltenen Produkt- und Prozessdaten zur Prozessdaten-Einheit 3 geführt, in der die erhaltenen Daten ausgewertet und dargestellt werden. Im einzelnen werden folgende Funktionen ausgeführt:
- Auswertung der in der "KOMP-Datei" abgespeicherten Istwerte, und zwar
   * Temperaturen mit Darstellung von
      ** Mittelwerten
      ** Minimal- und Maximalwerten
      ** Standardabweichung (1 Sigma und 2 Sigma)
      ** Häufigkeitsverteilung
      ** Summenkurve,
   * Drücke,
   * Volumenströme,
   * Abkühlzeit auf den Kühlstrecken (von 800 °C auf 500 °C = t_{8/5})
      ** nur aktuelle Werte,
   * Mechanische Eigenschaften wie z. B.
      ** Zugfestigkeit - Rₘ
      ** Streckgrenze - Rₑ
      ** Dehnung - A₁₀
      ** Einschnürung - Z
- Darsteltung der Ergebnisse für
   * ein Knüppel
   * ein Walzlos
   * ein Kühlprogramm
   * ein Zeitintervall.

Von der Prozessdaten-Einheit 3 erfolgt zur Optimierung der Qualität über eine entsprechende Verknüpfung 7 ein Datentransfer zur Technologiedaten-Einheit 2 mit den Funktionen:
- Zusammenfassung und Komprimierung der Kühlprogramme für eine schnelle übersicht,
- Vorgaben für die Kühlstrategien,
- Automatische Erstellung von Kühlprgrammen durch die Vorgabe der Solltemperaturen
- Vorgabe der gewünschten mechanischen Eigenschaften sowie Rückführung der im Walzprozess erzielten Eigenschaften zur Qualitätsoptimierung.

Zur übermittlung der optimalen Kühlstrategie ist über eine Verknüpfung 8 die Technologiedaten-Einheit 2 mit der Simulations-Einheit 1 verbunden, womit der Wirkkreis geschlossen ist.

Zur Optimierung des ermittelten Kühlmodells ist zwischen der Prozessdaten-Einheit 3 und der Simulations-Einheit 1 mit der Verknüpfung 9 die Controll-Einheit 4 geschaltet, in der die Funktionen
- Rückrechnung der Kühlprogramme mit den aus dem Walzprozess erfassten Istwerten zur Optimierung des Simulations-Modells,
- Darstellung des temperaturverlaufs aus der Rückrechnung,
- Vergleich der simulierten und gemessenen Temperaturwerte mit Angabe der Abweichungen in °C und %. ausgeführt werden.

Mit den Merkmalen und Maßnahmen der Erfindung ist die Abkühlung auch von sonst schwierig zu kühlenden Walzprofilen in optimaler Weise möglich, da erfindungsgemäß die aktuellen Walzguttemperaturen zeitschnell an die gewünschten Solltemperaturen durch Korrektur der Kühlprogramme herangeführt werden, wobei die im Ausführungsbeispiel angegebenen Funktionseinheiten vereinfacht oder durch weitere Funktionseinheiten im Sinne der Erfindung ergänzt werden können.

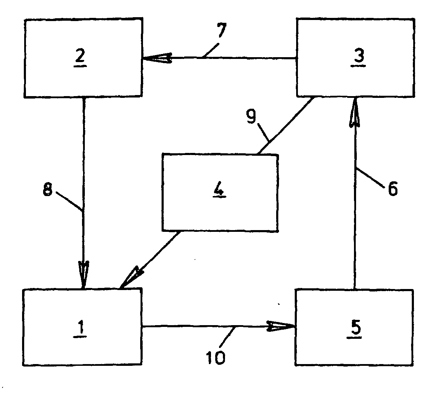

## Patentansprüche

1. Verfahren zum Abkühlen von warmgewalzten Profilen aus der Walzhitze, die aus Profilteilen mit unterschiedlicher Masse ausgebildet sind, wobei unter Verwendung von messtechnischen Mitteln im Zusammenwirken mit.einem Rechner der mit einem Rechenprogramm ausgerästert ist die den unterschiedlichen Profilteilen nach Maßgabe ihrer Masse und Temperatur anteilig zu entziehenden Wärmemengen und die hierfür erforderlichen Aufgabemengen des Kühlmittels berechnet und gesteuert werden, **dadurch gekennzeichnet, dass** der Temperaturverlauf in der Walzstraße für das Walzgut bereits vor dem eigentlichen Walz- bzw. Kühlprozess simuliert wird, wobei in mehreren Simulationsrechnungen die Kühlparameter in der Simulation so variiert werden, dass die Einstellungen des gewünschten Kühlverfahrens, beispielsweise Kühlen durch Abschrecken oder Kühlen mit minimalen Temperaturunterschieden, durch die erhaltenen Parameter aus der Simulation unter Einbeziehung vor und nach der Kühlstrecke gemessener Ist-Werte geregelt und gesteuert werden.

2. Verfahren nach Anspruch 1, **dadurch gekennzeichnet, dass** die für die Veränderung der Kühlparameter erforderlichen Regelungsparameter (z. B. Verstärkungsfaktoren) ebenfalls in der Simulationsrechnung berechnet und der Regelung zur Verfügung gestellt werden.

3. Verfahren nach Anspruch 1 oder 2, **dadurch gekennzeichnet, dass** für die Simulation des Temperaturverlaufs des Walzgutes die gesamte Oberfläche des Walzgutes in unterschiedliche Zonen mit entsprechend versehenen Randbedingungen aufgeteilt wird und diese Zonen mit den berechneten Kühlparametern beaufschlagt werden.

4. Vorrichtung zur Durchführung des Verfahrens nach einem oder mehreren der vorhergehenden Ansprüche, **gekennzeichnet durch** die zu einem geschlossenen Wirkkreis miteinander verknüpften Funktionseinheiten (1, 2, 3, 4, 5) mit
a) Simulations-Einheit (1) mit u. a. Simulation des Temperaturverlaufs für den Walz- und Abkühtprozess und Erzeugung der Kühlprogramme für die Kühlstrecken mit den Kühlparametern (Druck, Volumenstrom, Anzahl der Kühlzonen) sowie den für die Regelung benötigten Regelparametern,
b) Technologiedaten-Einheit (2) mit u. a. Vorgaben für die Kühlstrategie, automatischer Erstellung von Kühlprogrammen, Vorgabe der gewünschten mechanischen Eigenschaften und Rückführung der im Walzprozess erzielten Eigenschaften zur Qualitätsoptimierung,
c) Prozessdaten-Einheit (3) mit u. a. Auswertung der vor und nach der Kühlstrecke Ist-Werte (Temperaturen, Kühtmitteldrücke und -Volumenströme, Abkühlzeit, mechanische Eigenschaften, etc.),
d) Controll-Einheit (4) mit u. a. Rückrechnung der Kühlprogramme mit den erfassten Ist-Werten, Vergleich der simulierten und gemessenen Temperaturwerte,
e) Regelungs-Einheit (5) mit u. a. VerwaLtung der Kühlprogramme, Vorgabe der Einstellwerte für die Kühlstrecken, Steuerung und Regelung der Kühlzonen, Erfassung der Ist-Werte.

## Claims

1. A method for cooling down the rolling heat of hot-rolled profiles that consist of profile sections with different masses, wherein the proportionate quantities of heat to be withdrawn from the different profile sections in accordance with their mass and temperature, as well as the respectively required quantities of the cooling medium, are calculated and controlled by utilizing metrological means in connection with a computer that is equipped with a corresponding program, **characterized in that** the march of temperature in the rolling train for the rolling stock is already simulated before the actual rolling and cooling processes take place, wherein the cooling parameters are varied during several simulation calculations during the simulation in such a way that the adjustments of the desired cooling properties, for example, cooling by means of quenching or cooling with minimal differences in temperature, are regulated and controlled with the parameters obtained from the simulation and by taking into account actual values measured upstream and downstream of the cooling section.

2. The method according to Claim 1, **characterized in that** the control parameters required for varying the cooling parameters (e.g., amplifications) are also calculated during the simulation calculation and made available to the control.

3. The method according to Claim 1 or 2, **characterized in that** the march of temperature of the rolling stock is simulated by dividing the entire surface of the rolling stock into different zones that are assigned corresponding boundary values, and **in that** these zones are acted upon with the calculated cooling parameters.

4. A device for carrying out the method according to at least one of the preceding claims, **characterized in that** the functional units (1, 2, 3, 4, 5) listed below are linked to one another in order to form a closed circuit:
a) a simulation unit (1), among other things, for simulating the march of temperature for the rolling and cooling processes and for generating the cooling program for the cooling sections with the corresponding cooling parameters (pressure, volume flow, number of cooling zones), as well as the control parameters required for the control;
b) a technology data unit (2), among other things, for predetermining the cooling strategy, automatically generating cooling programs, predetermining the desired mechanical properties and feeding back the properties obtained during the rolling process in order to optimize the quality;
c) a process data unit (3), among other things, for evaluating the actual values upstream and downstream of the cooling section (temperatures, cooling medium pressures and volume flows, cooling time, mechanical properties, etc.);
d) a control unit (4), among other things, for recalculating the cooling programs in accordance with the measured actual values and comparing the simulated and the measured temperature values, and
e) a regulating unit (5), among other things, for managing the cooling programs, predetermining the values for the cooling sections to be adjusted, controlling and regulating the cooling zones and acquiring the actual values.

## Revendications

1. Procédé de refroidissement de profilés laminés à chaud sortant de la chaleur
de laminage et qui sont constitués de pièces profilées de masses différentes, dans lequel, en utilisant des moyens de technique de mesure en conjonction avec un calculateur qui est équipé d'un programme de calcul; les quantités de chaleur à éliminer en fonction de leur masse et à leur température des diverses pièces profilées et les quantités d'apport de refroidisseur nécessaires à cet effet sont calculées et contrôlées, **caractérisé en ce que** l'évolution de température dans le train de laminoir pour le produit laminé est simulée dès avant le processus de laminage ou de refroidissement proprement dit, sachant qu'on varie, dans plusieurs calculs de simulation, les paramètres de refroidissement de la simulation de manière à ce que les réglages pour le procédé de refroidissement souhaité, par exemple le refroidissement par trempe ou le refroidissement avec des différences de température minimales, soient régulés et contrôlés à l'aide des paramètres obtenus grâce à la simulation en intégrant des valeurs réelles mesurées avant et après le segment de refroidissement.

2. Procédé selon la revendication 1, **caractérisé en ce que** les paramètres de
régulation nécessaires à la modification des paramètres de régulation (par exemple les facteurs d'amplification) sont également calculés dans le calcul de simulation et mis à disposition pour la régulation.

3. Procédé selon la revendication 1 ou 2, **caractérisé en ce que**, pour la simulation
de l'évolution de température du produit laminé, l'ensemble de la surface du produit laminé est divisée en différentes zones présentant des contraintes différentes et que ces zones sont sollicitées avec les paramètres de refroidissement calculés.

4. Dispositif de réalisation du procédé selon l'une quelconque ou plusieurs des revendications précédentes, **caractérisé par** les unités fonctionnelles (1, 2, 3, 4, 5) rattachées les unes aux autres pour former un circuit actif fermé comprenant
a) une unité de simulation (1) incluant entre autres la simulation de l'évolution de température pour le processus de laminage et de refroidissement et la génération des programmes de refroidissement pour les segments de refroidissement à l'aide des paramètres de refroidissement (pression, flux volumique, nombre de zones de refroidissement) ainsi que les paramètres de réglage nécessaires à la régulation,
b) une unité technologique (2) incluant entre autres des prescriptions pour la stratégie de refroidissement, un établissement automatique de programmes de refroidissement, la prescription des propriétés mécaniques souhaitées et la mise en oeuvre des propriétés atteintes dans le processus de laminage pour optimiser la qualité,
c) une unité de traitement de données (3) incluant entre autres l'exploitation des valeurs réelles avant et après le segment de refroidissement (températures, pressions et flux volumique du refroidisseur, temps de refroidissement, propriétés mécaniques, etc.),
d) une unité de contrôle (4) incluant entre autres le recalcul des programmes de refroidissement à l'aide des valeurs réelles enregistrées, la comparaison des valeurs de température simulées et mesurées,
e) une unité de régulation (5) incluant entre autres la gestion des programmes de refroidissement, la prescription des valeurs de réglage, le contrôle et la régulation des zones de refroidissement, l'enregistrement des valeurs réelles.
